# EUROPÄISCHE PATENTSCHRIFT

(11) **EP 3 696 923 B1**
(45) Veröffentlichungstag und Bekanntmachung des Hinweises auf die Patenterteilung: **08.10.2025**
(21) Anmeldenummer: 20157602.2
(22) Anmeldetag: 17.02.2020
(51) Int. Cl.: H01R 24/58, H01R 13/64, G02B 6/38, H01R 13/52, G01D 5/244

(54) **STECKERANORDNUNG ZUR HERSTELLUNG EINER LÖSBAREN ENERGIE UND/ ODER DATENÜBERTRAGUNGSVERBINDUNG**
CONNECTOR ASSEMBLY FOR PRODUCING A RELEASABLE ENERGY AND / OR DATA TRANSMISSION LINK
ENSEMBLE CONNECTEUR PERMETTANT DE FABRIQUER UNE LIAISON DE TRANSMISSION D'ÉNERGIE ET/OU DE DONNÉES DÉTACHABLE

(30) Priorität: 18.02.2019 DE 102019202151
(43) Veröffentlichungstag der Anmeldung: 19.08.2020
(73) Patentinhaber: Deere & Company, Moline, IL 61265 (US)
(72) Erfinder: Lehmann, Philipp, 68163 Mannheim (DE); Tarasinski, Nicolai, 68163 Mannheim (DE); Kegel, Volker, 68163 Mannheim (DE); Daubermann, Julian, 68163 Mannheim (DE)
(74) Vertreter: Dehnhardt, Florian Christopher

(56) Entgegenhaltungen:
- US-A1- 2006 255 683
- US-A1- 2009 110 404
- US-A1- 2009 286 427
- US-A1- 2011 116 747
- US-A1- 2015 070 857
- US-A1- 2015 318 640
- US-B1- 6 554 490
- US-B1- 9 948 020
- US-B2- 8 192 234

## Beschreibung

Die Erfindung bezieht sich auf eine Steckeranordnung zur Herstellung einer lösbaren Energie- und/oder Datenübertragungsverbindung, mit einem Gehäusekörper und einem mit dem Gehäusekörper verbundenen Kontaktelement, wobei das Kontaktelement bezüglich einer vorgegebenen Steckrichtung rotationssymmetrisch ausgebildet ist und entlang der vorgegebenen Steckrichtung angeordnete ringförmige Kontaktzonen aufweist.

Eine derartige Steckeranordnung ist als sogenannter Klinkenstecker unter anderem aus der Bühnen- oder Studiotechnik bekannt und dient dort der Übertragung von Audiosignalen oder Versorgungsspannungen vergleichsweise geringer Stromstärke. Die Bauweise des Klinkensteckers erlaubt es diesem, sich in einer zugehörigen Kupplungsdose frei zu drehen, sodass ein mit diesem verbundenes Kabel vor unerwünschtem Verdrillen geschützt ist. Aufgrund dieser Eigenschaft bietet sich die Verwendung einer Klinkensteckerverbindung gerade auch zur Herstellung einer kabelgebundenen Energie- und/oder Datenübertragungsverbindung mit einer elektrisch betriebenen Landmaschine an, da ein zugehöriges Kabel aufgrund der freien Drehbarkeit der Steckverbindung möglichen Orientierungsänderungen der Landmaschine zu folgen vermag.

In diesem Zusammenhang geht aus der DE 10 2017 201 544 A1 eine kabelgebunden betriebene Landmaschine mit einer Kabeltrommel hervor. Um ein Überfahren eines von der Kabeltrommel abgespulten Kabelabschnitts zu unterbinden, wird dessen Verlauf sensorisch erfasst. Die Erfassung erfolgt mittels eines schwenkbaren Messfühlers, dessen Aufbau vergleichsweise komplex und für Verschmutzungen bzw. Beschädigungen von außen anfällig ist.

US 8 192 234 B2 offenbart einen Klinkenstecker für ein elektronisches Gerät wie einen tragbaren Musikplayer, ein Mobiltelefon oder einen Computer. Sensoren wie optische Sensoren, magnetische Sensoren, mechanische Sensoren, elektrische Sensoren, Widerstandssensoren und kapazitive Sensoren werden verwendet, um die Position und Bewegung des Audiosteckers relativ zur Audiobuchse zu überwachen. Ein Benutzer kann den Audiostecker drehen, um Vorgänge wie Medienwiedergabe, Menüauswahl und andere Aktivitäten im elektronischen Gerät zu steuern.

Es ist daher Aufgabe der vorliegenden Erfindung, eine robuste Anordnung zur Erfassung des Verlaufs eines zum elektrischen Betrieb einer Landmaschine vorgesehenen Energie- und/oder Datenübertragungskabels anzugeben.

Diese Aufgabe wird durch eine Steckeranordnung mit den Merkmalen des Patentanspruchs 1 gelöst.

Die erfindungsgemäße Steckeranordnung zur Herstellung einer lösbaren Energie- und/oder Datenübertragungsverbindung umfasst einen Gehäusekörper und ein mit dem Gehäusekörper verbundenes Kontaktelement, wobei das Kontaktelement bezüglich einer vorgegebenen Steckrichtung rotationssymmetrisch ausgebildet ist und entlang der vorgegebenen Steckrichtung angeordnete ringförmige Kontaktzonen aufweist. Hierbei ist an dem Kontaktelement wenigstens ein Codierungsmittel vorgesehen, das einen mit einer Rotationsstellung des Kontaktelements eindeutig variierenden Winkelcode bildet.

Die Erfindung macht sich den Umstand zunutze, dass im Falle einer kabelgebunden, mithin elektrisch betriebenen Landmaschine das zugehörige Kabel üblicherweise an einem seiner beiden Enden mittels einer lösbaren Steckverbindung an einer Energieversorgungsstation oder einer weiteren elektrisch betriebenen Landmaschine lösbar angebracht ist. Aufgrund der Rotationssymmetrie des Kontaktelements kann sich dieses frei innerhalb einer zugehörigen Steckerkupplung drehen, sodass die jeweilige Rotationsstellung des Kontaktelements bzw. der sich hieraus ergebende Winkelcode unmittelbar auf den Verlauf des daran angebrachten Kabels hinweist. Diese Information lässt sich beispielsweise zur Steuerung bzw. Lenkung der über das Kabel betriebenen Landmaschine nutzen. Zu diesem Zweck wird die Steckeranordnung derart an der Landmaschine angebracht, dass die durch die vorgegebene Steckrichtung definierte Drehachse des Kontaktelements mit der Vertikalachse der Landmaschine zusammenfällt. Aufgrund der in gestecktem Zustand innenliegenden Positionierung des wenigstens einen Codierungsmittels sowie seiner baulichen Integration in das Kontaktelement ermöglicht die so geschaffene Anordnung eine besonders robuste Verlaufserfassung des zum elektrischen Betrieb der Landmaschine vorgesehenen Energie- und/oder Datenübertragungskabels.

Die ringförmigen Kontaktzonen können hierbei gleichermaßen der Energie- wie Datenübertragung dienen. Bei diesen handelt es sich um aus Kupfer bestehende leitende Sektionsringe entsprechender Breite, wobei diese elektrisch voneinander isoliert sind. Zum Schutz vor Oxidation können die leitenden Sektionsringe zusätzlich mittels eines Edelmetalls, wie beispielsweise Gold oder Rhodium, hartbeschichtet sein.

Die Steckeranordnung kann entweder als Winkelstecker, bei dem ein in den Gehäusekörper eintretendes Energie- und/oder Datenübertragungskabel rechtwinklig gegenüber der vorgegebenen Steckrichtung verläuft, oder aber als gerader Stecker mit einem in Richtung der vorgegebenen Steckrichtung in den Gehäusekörper eintretenden Kabel ausgebildet sein.

Bei der Landmaschine handelt es sich beispielsweise um einen landwirtschaftlichen Traktor, eine Erntemaschine, einen Feldhäcksler, eine selbstfahrende Spritze oder dergleichen, wobei mehrere Landmaschinen einen über zugehörige Energie- und/oder Datenübertragungskabel kommunizierenden Flottenverband bilden können. Ein Beispiel für einen solchen Flottenverband findet sich in der DE 10 2017 217 481 A1. Daneben ist auch eine Verwendung im Zusammenhang mit Baumaschinen denkbar, die beispielsweise in einer Straßenbaukolonne oder dergleichen miteinander agieren.

An dem Gehäusekörper der Steckeranordnung ist erfindungsgemäß ein Befestigungselement zur Anbringung eines Halteseils ausgebildet. Das Halteseil ist beispielsweise auf einer Seiltrommel bevorratet und dient der Führung bzw. Entlastung des zum Betrieb der Landmaschine vorgesehenen Kabels. Der jeweilige Abspulzustand der Seiltrommel erlaubt einen unmittelbaren Rückschluss auf den aktuellen Abstand zwischen der Landmaschine und dem Ursprungspunkt des Halteseils und damit letztlich auch des Kabels. Gemeinsam mit der sich aus der Rotationsstellung des Kontaktelements ergebenden Richtungslage der Landmaschine ist eine eindeutige Positionsbestimmung relativ zu dem festen Ursprungspunkt möglich. Alternativ kann anstelle eines Halteseils auch ein reines Abstandsmessseil zur Verwirklichung eines Seilzugsensors ausgebildet sein. Das Befestigungselement ist insbesondere als Befestigungsauge einstückig an einer Oberseite des Gehäusekörpers der Steckeranordnung ausgeformt, wobei sich in das Befestigungsauge ein mit dem Halteseil verbundener Karabinerhaken oder dergleichen einhängen lässt.

Vorteilhafte Weiterbildungen der erfindungsgemäßen Steckeranordnung ergeben sich aus den Unteransprüchen.

Vorzugsweise ist das wenigstens eine Codierungsmittel als an dem Kontaktelement ringförmig angeordneter Strichcode ausgebildet. Der Strichcode kann in Gestalt eines zugehörigen Sektionsrings zwischen den ringförmigen Kontaktzonen des Kontaktelements angeordnet sein und eine Vielzahl von in der vorgegebenen Steckrichtung verlaufende Codierstriche aufweisen. Das Auslesen des wenigstens einen Codierungsmittels kann in diesem Fall verschleißfrei durch kontaktlose sensorische Erfassung der Codierstriche erfolgen.

Die Bezeichnung "Codierstrich" ist hierbei abstrakt zu verstehen. So kann es sich neben optisch wahrnehmbaren Markierungen auch um entsprechend magnetisierte Bereiche handeln. Letztere sind in den von dem wenigstens einen Codierungsmittel umfassten Sektionsring eingebettet und zeichnen sich durch besondere Unempfindlichkeit gegenüber äußeren Verschmutzungen und Beschädigungen aus. Dementsprechend ist der Strichcode entweder optisch oder magnetisch auslesbar.

Des Weiteren besteht die Möglichkeit, dass das wenigstens eine Codierungsmittel zumindest zwei in der vorgegebenen Steckrichtung hintereinander angeordnete Strichcodes aufweist. Die Strichcodes sind dabei entweder redundant oder aber derart gegeneinander verdreht bzw. versetzt angeordnet, dass zugleich eine Drehrichtungsbestimmung des Kontaktelements ermöglicht wird.

Anstelle der Verwendung eines mit einem Strichcode versehenen Sektionsrings ist es auch denkbar, dass das wenigstens eine Codierungsmittel als an dem Kontaktelement ringförmig angeordneter Sensorring mit entlang seines Umfangs kontinuierlich variierender Magnetisierung ausgebildet ist. Der Verlauf der Magnetisierung lässt dabei einen unmittelbaren Rückschluss auf die jeweilige Drehrichtung des Kontaktelements zu, wohingegen die Magnetisierungsstärke ein eindeutiges Maß für dessen jeweilige Rotationsstellung bildet.

Um ein ungewolltes Lösen einer mit der Steckeranordnung hergestellten Steckverbindung zu unterbinden, ist es möglich, dass eine an dem Kontaktelement umlaufende Einschnürung zur Ineingriffnahme eines Verriegelungsmittels beim Herstellen einer Steckverbindung mit einer Steckerkupplung vorhanden ist. Die Einschnürung kann sich insbesondere im Endbereich des Kontaktelements befinden.

Daneben kann ein an dem Gehäusekörper vorgesehenes Dichtungsmittel zur Herstellung eines staub- und/oder flüssigkeitsdichten Sitzes beim Herstellen einer Steckverbindung mit einer Steckerkupplung vorhanden sein. Bei dem Dichtungsmittel handelt es sich im einfachsten Fall um eine umlaufende Gummilippe, die gegen ein von der Steckerkupplung umfasstes Kupplungsgehäuse sitzdicht gepresst wird.

Neben den ringförmigen Kontaktzonen kann auch ein an dem Kontaktelement vorgesehener Lichtleiter zur breitbandigen bzw. störungssicheren optischen Übertragung digitaler Daten vorhanden sein.

Optional besteht die Möglichkeit, dass das wenigstens eine Codierungsmittel zusätzlich einen eine Funktionsbelegung des Kontaktelements charakterisierenden Typisierungscode umfasst.

Dieser kann insbesondere zur Konfiguration von über das Kabel kommunizierenden Steuerungs- bzw. Antriebssystemen der Landmaschine dienen. Der Typisierungscode kann in einem zusätzlichen RFID-Identifikationsmittel hinterlegt sein, das als Bestandteil des wenigstens einen Codierungsmittels im Gehäusekörper der Steckeranordnung untergebracht ist.

Weiterhin umfasst eine Steckerkupplung zur Aufnahme der erfindungsgemäßen Steckeranordnung eine mit dem Kontaktelement komplementär ausgebildete Buchse, wobei innerhalb der Buchse mit den ringförmigen Kontaktzonen in Anlage bringbare Federkontakte sowie Erfassungsmittel zum Auslesen des wenigstens einen Codierungsmittels vorgesehen sind. Bei den Erfassungsmitteln handelt es sich beispielsweise um einen Reflexions-Lichtsensor zum Abtasten eines optisch auslesbaren Strichcodes oder um einen Hallsensor zur Erfassung eines von einem magnetisch auslesbaren Strichcode bzw. einem magnetisierten Sensorring beeinflussten bzw. hervorgerufenen Magnetfelds.

Zum Schutz der Buchse vor eindringenden Verschmutzungen kann an einem Kupplungsgehäuse des Weiteren ein Schutzdeckel angebracht sein, der sich entgegen einer rückstellenden Kraft aus einer die Buchse nach außen hin verschließenden Position in eine die Buchse freigebende Position verbringen lässt. Der Schutzdeckel kann zu diesem Zweck an dem Kupplungsgehäuse verschwenkbar oder verschiebbar angebracht sein.

Um die Steckeranordnung innerhalb der Buchse zu sichern, kann die Steckerkupplung ein manuell betätigbares Verriegelungsmittel mit einer Kugelkupplung aufweisen, die zur lösbaren Ineingriffnahme in eine an dem Kontaktelement umlaufende Einschnürung ausgebildet ist, wobei das Verriegelungsmittel insbesondere in Richtung einer Verriegelungsposition vorgespannt ist. Das Verriegelungsmittel weist insbesondere ein mit der Hand betätigbares Entriegelungsstück auf, das sich in eine die Kugelkupplung freigebende Entriegelungsposition verbringen lässt.

Um ein Lösen einer zwischen Steckeranordnung und Steckerkupplung hergestellten Steckverbindung zu erleichtern bzw. zu unterstützen, kann ein stirnseitig innerhalb der Buchse angeordnetes Federelement zur Ausübung einer Auswurfkraft auf ein in der Buchse befindliches Kontaktelement vorgesehen sein.

Zusätzlich ist es möglich, dass ein innerhalb der Buchse angeordnetes Dichtungsmittel zur Herstellung eines staub- und/oder flüssigkeitsdichten Sitzes gegenüber einem in der Buchse befindlichen Kontaktelement vorhanden ist. Bei dem Dichtungsmittel handelt es sich im einfachsten Fall um einen umlaufenden Gummiring, der beim Herstellen der Steckverbindung mit der Steckeranordnung gegen das von dieser umfasste Kontaktelement sitzdicht gepresst wird.

Die erfindungsgemäße Steckeranordnung bzw. Steckerkupplung wird im Folgenden anhand der beigefügten Zeichnungen näher erläutert. Hierbei bezeichnen übereinstimmende Bezugszeichen baulich identische oder bezüglich ihrer Funktion vergleichbare Komponenten. Es zeigen:
- Fig. 1: ein Ausführungsbeispiel der erfindungsgemäßen Steckeranordnung zur Herstellung einer lösbaren Energie- und/oder Datenübertragungsverbindung, und
- Fig. 2: ein im Schnitt wiedergegebenes Ausführungsbeispiel der erfindungsgemäßen Steckerkupplung zum Gebrauch mit der in Fig. 1 dargestellten Steckeranordnung.

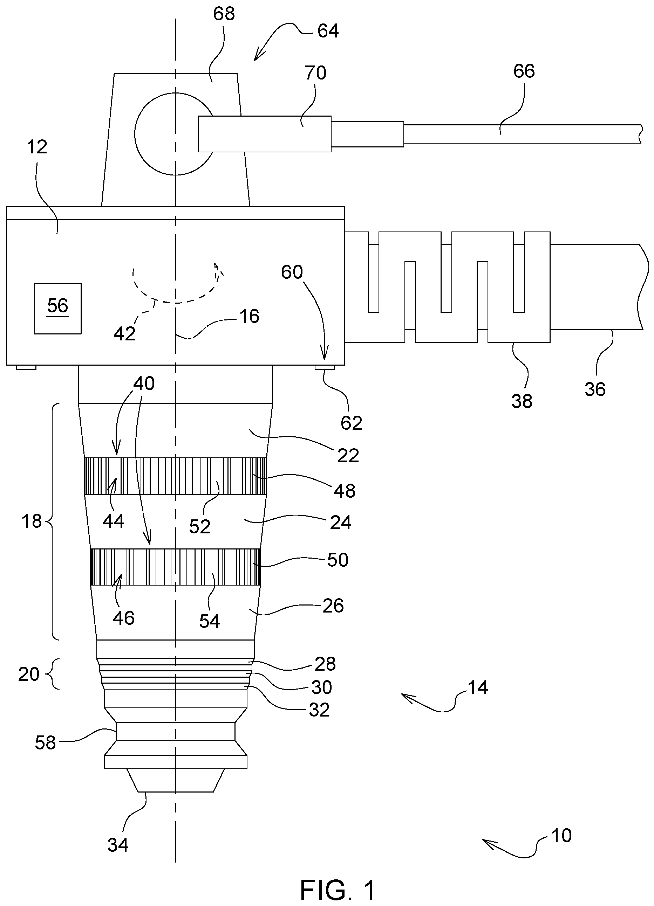

Fig. 1 zeigt ein Ausführungsbeispiel der erfindungsgemäßen Steckeranordnung zur Herstellung einer lösbaren Energie- und/oder Datenübertragungsverbindung mit einer nicht dargestellten elektrisch betriebenen Landmaschine.

Die nach Art eines Klinkensteckers ausgebildete Steckeranordnung 10 umfasst einen aus glasfaserverstärkten Kunststoff oder Metalldruckguss bestehenden Gehäusekörper 12 und ein mit dem Gehäusekörper 12 verbundenes Kontaktelement 14. Das Kontaktelement 14 ist bezüglich einer vorgegebenen Steckrichtung 16 rotationssymmetrisch ausgebildet und weist mehrere entlang der vorgegebenen Steckrichtung 16 angeordnete ringförmige Kontaktzonen 18, 20 auf.

Beispielsgemäß handelt es sich bei den ringförmigen Kontaktzonen 18, 20 um erste zweite und dritte leitende Sektionsringe 22, 24, 26 zur Energieübertragung sowie um vierte, fünfte und sechste leitende Sektionsringe 28, 30, 32 zur Datenübertragung, wobei diese elektrisch voneinander isoliert sind. Die leitenden Sektionsringe 22 bis 32 bestehen aus Kupfer und weisen eine der jeweils zu übertragenden Stromstärke entsprechende Breite auf. Zum Schutz vor Oxidation sind die leitenden Sektionsringe 22 bis 32 mittels eines Edelmetalls, wie beispielsweise Gold oder Rhodium, hartbeschichtet.

Neben den ringförmigen Kontaktzonen 18, 20 ist zusätzlich ein an dem Kontaktelement 14 vorgesehener Lichtleiter 34 zur breitbandigen bzw. störungssicheren optischen Übertragung digitaler Daten vorhanden. Im vorliegenden Fall befindet sich dieser an einem stirnseitigen Ende des Kontaktelements 14.

Die Steckeranordnung 10 ist vorliegend als Winkelstecker ausgebildet, d.h. ein in den Gehäusekörper 12 eintretendes Energie- und/oder Datenübertragungskabel 36 verläuft rechtwinklig gegenüber der vorgegebenen Steckrichtung 16. Ein aus elastischem Kunststoff bestehender Knickschutz 38 dient dabei der mechanischen Entlastung des Kabels 36.

Des Weiteren ist an dem Kontaktelement 14 wenigstens ein Codierungsmittel 40 vorgesehen, das einen mit einer Rotationsstellung 42 des Kontaktelements 14 eindeutig variierenden Winkelcode bildet.

Aufgrund der Rotationssymmetrie des Kontaktelements 14 kann sich die Steckeranordnung 10 frei innerhalb einer zugehörigen Steckerkupplung drehen, sodass die jeweilige Rotationsstellung 42 des Kontaktelements 14 bzw. der sich hieraus ergebende Winkelcode unmittelbar auf den Verlauf des daran angebrachten Kabels 36 hinweist. Diese Information lässt sich beispielsweise zur Steuerung bzw. Lenkung der über das Kabel 36 betriebenen Landmaschine nutzen. Zu diesem Zweck wird die Steckeranordnung 10 derart an der Landmaschine angebracht, dass die durch die vorgegebene Steckrichtung 16 definierte Drehachse des Kontaktelements 14 mit der Vertikalachse der Landmaschine zusammenfällt.

Entsprechend der Darstellung in Fig. 1 ist das wenigstens eine Codierungsmittel 40 als an dem Kontaktelement 14 ringförmig angeordneter erster bzw. zweiter Strichcode 44, 46 ausgebildet. Jeder der beiden Strichcodes 44, 46 ist in Gestalt eines zugehörigen Sektionsrings 48, 50 zwischen den ringförmigen Kontaktzonen 18, 20 des Kontaktelements 14 angeordnet und weist eine Vielzahl von in der vorgegebenen Steckrichtung 16 verlaufende Codierstriche 52, 54 auf.

Die Bezeichnung "Codierstrich" ist hierbei abstrakt zu verstehen. So handelt es sich entweder um optisch wahrnehmbare Markierungen oder aber um entsprechend magnetisierte Bereiche. Letztere sind in die von dem wenigstens einen Codierungsmittel 40 umfassten Sektionsringe 48, 50 eingebettet. Dementsprechend ist der erste bzw. zweite Strichcode 44, 46 entweder optisch oder magnetisch auslesbar.

Die beiden Strichcodes 44, 46 sind in der vorgegebenen Steckrichtung 16 hintereinander derart gegeneinander verdreht bzw. versetzt angeordnet, dass zugleich eine Drehrichtungsbestimmung des Kontaktelements 14 ermöglicht wird.

Optional umfasst das wenigstens eine Codierungsmittel 40 einen eine Funktionsbelegung des Kontaktelements 14 charakterisierenden Typisierungscode. Dieser dient zur Konfiguration von über das Kabel 36 betriebenen Steuerungs- bzw. Antriebssystemen der Landmaschine. Der Typisierungscode ist in einem zusätzlichen RFID-Identifikationsmittel 56 hinterlegt, das als Bestandteil des wenigstens einen Codierungsmittels 40 im Gehäusekörper 12 der Steckeranordnung 10 untergebracht ist.

Im Falle einer (nicht dargestellten) alternativen Ausbildung des wenigstens einen Codierungsmittels 40 ist anstelle der Verwendung eines mit einem Strichcode 44, 46 versehenen Sektionsrings 48, 50 ein an dem Kontaktelement 14 ringförmig angeordneter Sensorring mit entlang seines Umfangs kontinuierlich variierender Magnetisierung vorgesehen. Der Verlauf der Magnetisierung lässt dabei einen unmittelbaren Rückschluss auf die jeweilige Drehrichtung des Kontaktelements 14 zu, wohingegen die Magnetisierungsstärke ein eindeutiges Maß für dessen jeweilige Rotationsstellung 42 bildet.

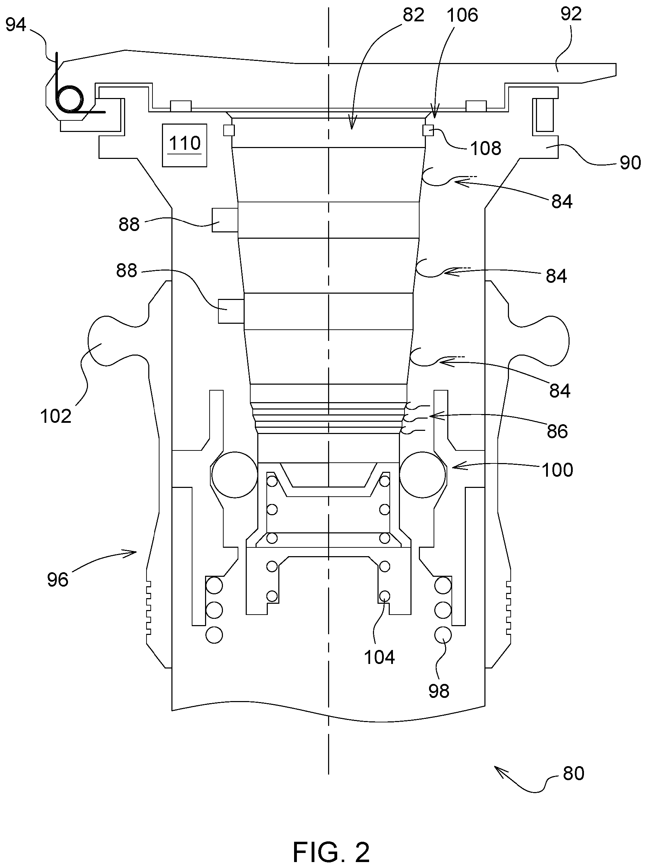

Um ein ungewolltes Lösen einer mit der Steckeranordnung 10 hergestellten Steckverbindung zu unterbinden, ist eine an dem Kontaktelement 14 umlaufende Einschnürung 58 zur Ineingriffnahme eines Verriegelungsmittels beim Herstellen einer Steckverbindung mit einer in Fig. 2 wiedergegebenen Steckerkupplung 80 vorhanden. Die Einschnürung 58 befindet sich im Endbereich des Kontaktelements 14.

Ein an dem Gehäusekörper 12 vorgesehenes Dichtungsmittel 60 dient der Herstellung eines staub- und/oder flüssigkeitsdichten Sitzes beim Herstellen der Steckverbindung mit der Steckerkupplung 80. Bei dem Dichtungsmittel 60 handelt es sich um eine umlaufende Gummilippe 62, die gegen ein von der Steckerkupplung 80 umfasstes Kupplungsgehäuse sitzdicht gepresst wird.

Zusätzlich ist an dem Gehäusekörper 12 der Steckeranordnung 10 ein Befestigungselement 64 zur Anbringung eines Halteseils 66 ausgebildet. Das Halteseil 66 ist beispielsweise auf einer (nicht dargestellten) Seiltrommel bevorratet und dient der Führung bzw. Entlastung des zum Betrieb der Landmaschine vorgesehenen Kabels 36. Das Befestigungselement 64 ist als Befestigungsauge 68 einstückig an einer Oberseite des Gehäusekörpers 12 der Steckeranordnung 10 ausgeformt, wobei in das Befestigungsauge 68 ein mit dem Halteseil 66 verbundener Karabinerhaken 70 oder dergleichen eingehängt ist.

Fig. 2 zeigt ein im Schnitt wiedergegebenes Ausführungsbeispiel der erfindungsgemäßen Steckerkupplung zum Gebrauch mit der in Fig. 1 dargestellten Steckeranordnung 10.

Die Steckerkupplung 80 umfasst eine mit dem Kontaktelement 14 komplementär ausgebildete Buchse 82 zur Aufnahme der Steckeranordnung 10, wobei innerhalb der Buchse 82 mit den ringförmigen Kontaktzonen 18, 20 in Anlage bringbare Federkontakte 84, 86 sowie Erfassungsmittel 88 zum Auslesen des wenigstens einen Codierungsmittels 40 vorgesehen sind. Bei den Erfassungsmitteln 88 handelt es sich um einen Reflexions-Lichtsensor zum Abtasten eines optisch auslesbaren Strichcodes 44, 46 oder um einen Hallsensor zur Erfassung eines von einem magnetisch auslesbaren Strichcode 44, 46 bzw. einem magnetisierten Sensorring beeinflussten bzw. hervorgerufenen Magnetfelds.

Zum Schutz der Buchse 82 vor eindringenden Verschmutzungen ist an einem Kupplungsgehäuse 90 ein Schutzdeckel 92 angebracht, der sich entgegen einer rückstellenden Kraft aus einer die Buchse 82 nach außen hin verschließenden Position in eine die Buchse 82 freigebende Position verbringen lässt. Der Schutzdeckel 92 ist zu diesem Zweck an dem Kupplungsgehäuse 90 verschwenkbar angebracht. Die rückstellende Kraft wird mittels einer Torsionsfeder 94 aufgebracht.

Um die Steckeranordnung 10 innerhalb der Buchse 82 zu sichern, weist die Steckerkupplung 80 ein manuell betätigbares Verriegelungsmittel 96 mit einer Kugelkupplung 100 auf, die zur lösbaren Ineingriffnahme in die an dem Kontaktelement 14 umlaufende Einschnürung 58 ausgebildet ist, wobei das Verriegelungsmittel 96 seitens einer Druckfeder 98 in Richtung einer Verriegelungsposition vorgespannt ist. Das Verriegelungsmittel 96 weist ein mit der Hand betätigbares Entriegelungsstück 102 auf, das sich in eine die Kugelkupplung 100 freigebende Entriegelungsposition verbringen lässt.

Um ein Lösen einer zwischen Steckeranordnung 10 und Steckerkupplung 80 hergestellten Steckverbindung zu erleichtern bzw. zu unterstützen, ist ein stirnseitig innerhalb der Buchse 82 angeordnetes Federelement 104 zur Ausübung einer Auswurfkraft für den Fall vorgesehen, dass sich das Kontaktelement 14 in der Buchse 82 befindet.

Zusätzlich ist ein innerhalb der Buchse 82 angeordnetes Dichtungsmittel 106 zur Herstellung eines staub- und/oder flüssigkeitsdichten Sitzes gegenüber dem Kontaktelement 14 vorhanden. Bei dem Dichtungsmittel 106 handelt es sich um einen umlaufenden Gummiring 108, der beim Herstellen der Steckverbindung mit der Steckeranordnung 10 gegen das von dieser umfasste Kontaktelement 14 sitzdicht gepresst wird.

Optional ist eine RFID-Leseeinheit 110 zum Auslesen des im RFID-Identifikationsmittel 56 hinterlegten Typisierungscodes vorhanden.

Abschließend sei angemerkt, dass es sich bei der über das Kabel 36 betriebenen Landmaschine um eine landwirtschaftlichen Traktor, eine Erntemaschine, einen Feldhäcksler, eine selbstfahrende Spritze oder dergleichen handeln kann, wobei mehrere Landmaschinen einen über zugehörige Energie- und/oder Datenübertragungskabel kommunizierenden Flottenverband bilden können. Ein Beispiel für einen solchen Flottenverband findet sich in der DE 10 2017 217 481 A1.

## Patentansprüche

1. Steckeranordnung zur Herstellung einer lösbaren Energie- und/oder Datenübertragungsverbindung, mit einem Gehäusekörper (12) und einem mit dem Gehäusekörper (12) verbundenen Kontaktelement (14), wobei das Kontaktelement (14) bezüglich einer vorgegebenen Steckrichtung (16) rotationssymmetrisch ausgebildet ist und entlang der vorgegebenen Steckrichtung (16) angeordnete ringförmige Kontaktzonen (18, 20) aufweist, wobei an dem Kontaktelement (14) wenigstens ein Codierungsmittel (40) vorgesehen ist, das einen mit einer Rotationsstellung (42) des Kontaktelements (14) eindeutig variierenden Winkelcode bildet, wobei die Steckeranordnung (10) entweder als Winkelstecker, bei dem ein in den Gehäusekörper (12) eintretendes Energie- und/oder Datenübertragungskabel (36) rechtwinklig gegenüber der vorgegebenen Steckrichtung (16) verläuft, oder aber als gerader Stecker mit einem in Richtung der vorgegebenen Steckrichtung (16) in den Gehäusekörper (12) eintretenden Kabel (36) ausgebildet ist, **dadurch gekennzeichnet, dass** an dem Gehäusekörper (12) ein Befestigungselement (64) zur Anbringung eines Halteseils (66) ausgebildet ist.

2. Steckeranordnung nach Anspruch 1, **dadurch gekennzeichnet, dass** das wenigstens eine Codierungsmittel (40) als an dem Kontaktelement (14) ringförmig angeordneter Strichcode (44, 46) ausgebildet ist.

3. Steckeranordnung nach Anspruch 2, **dadurch gekennzeichnet, dass** der Strichcode (44, 46) entweder optisch oder magnetisch auslesbar ist.

4. Steckeranordnung nach wenigstens einem der Ansprüche 1 bis 3, **dadurch gekennzeichnet, dass** das wenigstens eine Codierungsmittel (40) zumindest zwei in der vorgegebenen Steckrichtung (16) hintereinander angeordnete Strichcodes (44, 46) aufweist.

5. Steckeranordnung nach wenigstens einem der Ansprüche 1 bis 4, **dadurch gekennzeichnet, dass** das wenigstens eine Codierungsmittel (40) als an dem Kontaktelement (14) ringförmig angeordneter Sensorring mit entlang seines Umfangs kontinuierlich variierender Magnetisierung ausgebildet ist.

6. Steckeranordnung nach wenigstens einem der Ansprüche 1 bis 5, **dadurch gekennzeichnet, dass** eine an dem Kontaktelement (14) umlaufende Einschnürung (58) zur Ineingriffnahme eines Verriegelungsmittels (96) beim Herstellen einer Steckverbindung mit einer Steckerkupplung (80) vorhanden ist.

7. Steckeranordnung nach wenigstens einem der Ansprüche 1 bis 6, **dadurch gekennzeichnet, dass** ein an dem Gehäusekörper (12) vorgesehenes Dichtungsmittel (60) zur Herstellung eines staub- und/oder flüssigkeitsdichten Sitzes beim Herstellen einer Steckverbindung mit einer Steckerkupplung (80) vorhanden ist.

8. Steckeranordnung nach wenigstens einem der Ansprüche 1 bis 7, **dadurch gekennzeichnet, dass** ein an dem Kontaktelement (14) vorgesehener Lichtleiter (34) zur optischen Übertragung digitaler Daten vorhanden ist.

9. Steckeranordnung nach wenigstens einem der Ansprüche 1 bis 8, **dadurch gekennzeichnet, dass** das wenigstens eine Codierungsmittel (40) zusätzlich einen eine Funktionsbelegung des Kontaktelements (14) charakterisierenden Typisierungscode umfasst.

10. Steckerkupplung mit einer darin aufgenommenen Steckeranordnung (10) nach wenigstens einem der Ansprüche 1 bis 9, umfassend eine mit dem Kontaktelement (14) komplementär ausgebildete Buchse (82), wobei innerhalb der Buchse (82) mit den ringförmigen Kontaktzonen (18, 20) in Anlage bringbare Federkontakte (84, 86) sowie Erfassungsmittel (88) zum Auslesen des wenigstens einen Codierungsmittels (40) vorgesehen sind.

11. Steckerkupplung nach Anspruch 10, **dadurch gekennzeichnet, dass** an einem Kupplungsgehäuse (90) ein Schutzdeckel (92) angebracht ist, der sich entgegen einer rückstellenden Kraft aus einer die Buchse (82) nach außen hin verschließenden Position in eine die Buchse (82) freigebende Position verbringen lässt.

12. Steckerkupplung nach Anspruch 10 oder 11, **gekennzeichnet durch** ein manuell betätigbares Verriegelungsmittel (96) mit einer Kugelkupplung (100), die zur lösbaren Ineingriffnahme in eine an dem Kontaktelement (14) umlaufende Einschnürung (58) ausgebildet ist, wobei das Verriegelungsmittel (96) insbesondere in Richtung einer Verriegelungsposition vorgespannt ist.

13. Steckerkupplung nach wenigstens einem der Ansprüche 10 bis 12, **dadurch gekennzeichnet, dass** ein stirnseitig innerhalb der Buchse (82) angeordnetes Federelement (104) zur Ausübung einer Auswurfkraft auf ein in der Buchse (82) befindliches Kontaktelement (14) vorgesehen ist.

14. Steckerkupplung nach wenigstens einem der Ansprüche 10 bis 14, **dadurch gekennzeichnet, dass** ein innerhalb der Buchse (82) angeordnetes Dichtungsmittel (106) zur Herstellung eines staub- und/oder flüssigkeitsdichten Sitzes gegenüber einem in der Buchse (82) befindlichen Kontaktelement (14) vorhanden ist.

## Claims

1. Plug arrangement for producing a detachable energy- and/or data-transmitting connection, having a housing body (12) and a contact element (14) that is connected to the housing body (12), wherein the contact element (14) is embodied in a rotationally symmetrical manner in relation to a predetermined plugging direction (16) and comprises annular contact zones (18, 20) that are arranged along the predetermined plugging direction (16), wherein at least one coding means (40) is provided on the contact element (14), said coding means forming an angular code that clearly varies with a rotational position (42) of the contact element (14), wherein the plug arrangement (10) may either be embodied as an angle plug in which an energy- and/or data-transmitting cable (36) that is introduced into the housing body (12) extends at a right-angle with respect to the predetermined plugging direction (16) or however may also be embodied as a straight plug having a cable (36) that is introduced into the housing body (12) in the direction of the predetermined plugging direction (16), **characterized in that** a fastening element (64) for attaching a holding cable (66) is embodied on the housing body (12).

2. Plug arrangement according to Claim 1, **characterized in that** the at least one coding means (40) is embodied as a bar code (44, 46) that is arranged in an annular manner on the contact element (14).

3. Plug arrangement according to Claim 2, **characterized in that** the bar code (44, 46) may be read either optically or magnetically.

4. Plug arrangement according to at least one of Claims 1 to 3, **characterized in that** the at least one coding means (40) comprises at least two bar codes (44, 46) that are arranged one behind the other in the predetermined plugging direction (16).

5. Plug arrangement according to at least one of Claims 1 to 4, **characterized in that** the at least one coding means (40) is embodied as a sensor ring that is arranged in an annular manner on the contact element (14), said sensor ring having a magnetization that varies continuously along the circumference of said sensor ring.

6. Plug arrangement according to at least one of Claims 1 to 5, **characterized in that** a constriction (58) that extends circumferentially on the contact element (14) is provided for a locking means (96) to engage into when a plug connection to a plug coupling arrangement (80) is produced.

7. Plug arrangement according to at least one of Claims 1 to 6, **characterized in that** a sealing means (60) that is provided on the housing body (12) is provided so as to produce a seat that is sealed with respect to dust and/or fluid when a plug connection to a plug coupling arrangement (80) is produced.

8. Plug arrangement according to at least one of Claims 1 to 7, **characterized in that** a light guide (34) that is provided on the contact element (14) is provided for the optical transmission of digital data.

9. Plug arrangement according to at least one of Claims 1 to 8, **characterized in that** the at least one coding means (40) additionally comprises a typification code that characterizes a function of the contact element (14).

10. Plug coupling with a plug arrangement (10) according to at least one of Claims 1 to 9 accommodated therein, comprising a socket (82) that is embodied in a manner that complements the contact element (14), wherein resilient contacts (84, 86) that may be brought into contact with the annular contact zones (18, 20) and also ascertaining means (88) for reading the at least one coding means (40) are provided within the socket (82).

11. Plug coupling according to Claim 10, **characterized in that** a protective cover (92) is attached to a coupling housing (90) and said protective cover may be brought against a returning force out of a position that closes the socket (82) to the outside into a position that releases the socket (82).

12. Plug coupling according to Claim 10 or 11, **characterized by** a manually-actuatable locking means (96) having a ball coupling (100) that is embodied so as to engage in a detachable manner into a constriction (58) that extends circumferentially on the contact element (14), wherein the locking means (96) is in particular prestressed in the direction of a locking position.

13. Plug coupling according to at least one of Claims 10 to 12, **characterized in that** a resilient element (104) that is arranged on the end face within the socket (82) is provided so as to exert an expelling force on a contact element (14) that is located in the socket (82).

14. Plug coupling according to at least one of Claims 10 to 14, **characterized in that** a sealing means (106) that is arranged within the socket (82) so as to produce a seat that is sealed with respect to dust and/or fluid is provided opposite a contact element (14) that is located in the socket (82).

## Revendications

1. Ensemble connecteur pour la fabrication d'une liaison de transmission d'énergie et/ou de données détachable, comprenant un corps de boîtier (12) et un élément de contact (14) relié au corps de boîtier (12), l'élément de contact (14) étant symétrique de rotation par rapport à une direction d'enfichage prédéfinie (16) et présentant des zones de contact annulaires (18, 20) disposées le long de la direction d'enfichage prédéfinie (16), au moins un moyen de codage (40) étant prévu sur l'élément de contact (14) et formant un code angulaire variant de manière univoque en fonction d'une position de rotation (42) de l'élément de contact (14), l'ensemble connecteur (10) étant réalisé soit sous forme de connecteur coudé, dans lequel un câble de transmission d'énergie et/ou de données (36) entrant dans le corps de boîtier (12) s'étend à angle droit par rapport à la direction d'enfichage prédéfinie (16), soit sous forme de connecteur droit comprenant un câble (36) entrant dans le corps de boîtier (12) dans la direction d'enfichage prédéfinie (16), **caractérisé en ce qu'**un élément de fixation (64) pour la mise en place d'un câble de retenue (66) est réalisé sur le corps de boîtier (12).

2. Ensemble connecteur selon la revendication 1, **caractérisé en ce que** ledit au moins un moyen de codage (40) est réalisé sous forme de code-barres (44, 46) disposé de manière annulaire sur l'élément de contact (14).

3. Ensemble connecteur selon la revendication 2, **caractérisé en ce que** le code-barres (44, 46) est lisible optiquement ou magnétiquement.

4. Ensemble connecteur selon au moins l'une des revendications 1 à 3, **caractérisé en ce que** ledit au moins un moyen de codage (40) présente au moins deux codes-barres (44, 46) disposés les uns derrière les autres dans la direction d'enfichage prédéfinie (16).

5. Ensemble connecteur selon au moins l'une des revendications 1 à 4, **caractérisé en ce que** ledit au moins un moyen de codage (40) est réalisé sous forme de capteur annulaire disposé sous forme d'anneau sur l'élément de contact (14) et présentant une aimantation variant de manière continue le long de sa circonférence.

6. Ensemble connecteur selon au moins l'une des revendications 1 à 5, **caractérisé en ce qu'**un rétrécissement (58) circonférentiel sur l'élément de contact (14) est présent pour la mise en prise d'un moyen de verrouillage (96) lors de l'établissement d'une liaison enfichable avec une prise de raccordement de connecteur (80).

7. Ensemble connecteur selon au moins l'une des revendications 1 à 6, **caractérisé en ce qu'**un moyen d'étanchéité (60) prévu sur le corps de boîtier (12) est présent pour l'établissement d'un siège étanche à la poussière et/ou aux liquides lors de l'établissement d'une liaison enfichable avec une prise de raccordement de connecteur (80).

8. Ensemble connecteur selon au moins l'une des revendications 1 à 7, **caractérisé en ce qu'**un guide de lumière (34) prévu sur l'élément de contact (14) est présent pour la transmission optique de données numériques.

9. Ensemble connecteur selon au moins l'une des revendications 1 à 8, **caractérisé en ce que** ledit au moins un moyen de codage (40) comprend en outre un code de typage caractérisant une affectation de fonction de l'élément de contact (14).

10. Prise de raccordement de connecteur doté d'un ensemble connecteur (10) selon au moins l'une des revendications 1 à 9 reçu dans celle-ci, comprenant une douille (82) réalisée de manière complémentaire à l'élément de contact (14), des contacts à ressort (84, 86) pouvant être mis en contact avec les zones de contact annulaires (18, 20) ainsi que des moyens de détection (88) permettant de lire ledit au moins un moyen de codage (40) étant prévus à l'intérieur de la douille (82).

11. Prise de raccordement de connecteur selon la revendication 10, **caractérisée en ce qu'**un capot de protection (92) est fixé sur un boîtier d'accouplement (90) qui peut être amené, à l'encontre d'une force de rappel, d'une position fermant la douille (82) vers l'extérieur à une position libérant la douille (82).

12. Prise de raccordement de connecteur selon la revendication 10 ou 11, **caractérisée par** un moyen de verrouillage (96) actionnable manuellement avec un accouplement à billes (100) qui est conçu pour une mise en prise détachable dans un rétrécissement (58) circonférentiel sur l'élément de contact (14), le moyen de verrouillage (96) étant en particulier précontraint dans la direction d'une position de verrouillage.

13. Prise de raccordement de connecteur selon au moins l'une des revendications 10 à 12, **caractérisée en ce qu'**il est prévu un élément à ressort (104) disposé du côté avant à l'intérieur de la douille (82) pour exercer une force d'éjection sur un élément de contact (14) se trouvant dans la douille (82).

14. Prise de raccordement de connecteur selon au moins l'une des revendications 10 à 14, **caractérisée en ce qu'**un moyen d'étanchéité (106) disposé à l'intérieur de la douille (82) est présent pour l'établissement d'un siège étanche à la poussière et/ou aux liquides par rapport à un élément de contact (14) se trouvant dans la douille (82).
